# EUROPEAN PATENT SPECIFICATION

(11) **EP 3 653 047 B1**
(45) Date of publication and mention of the grant of the patent: **28.08.2024**
(21) Application number: 19198368.3
(22) Date of filing: 19.09.2019
(51) Int. Cl.: A01K 7/02, C02F 1/32

(54) **LIQUID DISPENSER FOR ANIMALS**
FLÜSSIGKEITSSPENDER FÜR TIERE
DISTRIBUTEUR DE LIQUIDE POUR ANIMAUX

(30) Priority: 19.09.2018 US 201862733393 P; 01.11.2018 KR 20180133062; 22.05.2019 KR 20190059786
(43) Date of publication of application: 20.05.2020
(73) Proprietor: LG Electronics Inc., Seoul 07336 (KR)
(72) Inventor: YOO, Hyunsun, Seoul 08592 (KR); CHUN, Jaehung, Seoul 08592 (KR); EUN, Yousook, Seoul 08592 (KR); KIM, Joogyeom, Seoul 08592 (KR); KIM, Sungkyung, Seoul 08592 (KR); KIM, Myongsun, Seoul 08592 (KR)
(74) Representative: Vossius & Partner Patentanwälte Rechtsanwälte mbB

(56) References cited:
- CN-A- 106 962 218
- CN-A- 108 271 728
- US-A1- 2016 118 179
- US-A1- 2018 160 648

## Description

### BACKGROUND

### 1. Field

A liquid dispenser to supply liquid, drinking water to an animal, e.g., a pet, is disclosed herein.

### 2. Background

Pet water dispensers may use electronic devices such as pumps, and so power transmission may be required to operate such a pet water dispenser. A method to supply power may include using a wireless power transmission method.

European Patent No. 3315022 and U.S. Publication No. 2014/0053781 disclose drinking bowls for pets. However, such drinking bowls have various disadvantages, which the present disclosure solves.

The invention is specified in the independent claims. Further aspects of the invention are defined in the dependent claims.

CN 106 962 218 A relates to a pet drinking device comprising a water storage basin, a carrier shell is arranged in the water storage basin, a micro water pump is arranged in the carrier shell, a storage battery is connected to the micro water pump, a through hole is formed in an upper cover of the carrier shell, a top cover is connected to the upper portion of the carrier shell through threads, a water outlet is formed in the top cover, and a pyroelectric sensor is connected to the exterior of the water storage basin.

### BRIEF DESCRIPTION OF THE DRAWINGS

FIG. 1 is a perspective view showing a pet water dispenser according to an embodiment;
FIG. 2 is a sectional view of the pet water dispenser shown in Fig. 1;
FIG. 3 is a flowchart showing a process in which external power is delivered to a pet water dispenser via a docking station;
FIG. 4 is a sectional view of a pet water dispenser in which the docking station is separated;
FIG. 5 is a flowchart illustrating a process of the controller selecting a power supply according to connection information of a docking station;
FIG. 6 is a cross-sectional view showing the separation of a water tank and an inner assembly of the pet water dispenser;
FIG. 7 is a flowchart showing a process of controlling a discharge of an auxiliary battery according to coupling information of the inner assembly; and
FIG. 8 is a graph showing the relationship between a charging rate of the auxiliary battery and a charging rate of the auxiliary battery, and a process of limiting a power supply.

### DETAILED DESCRIPTION

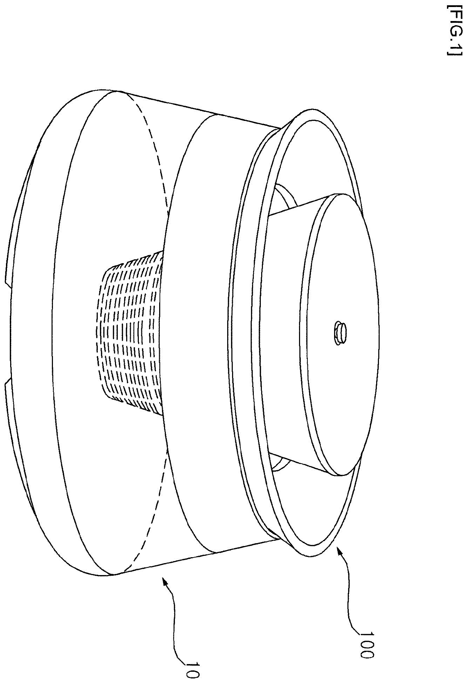

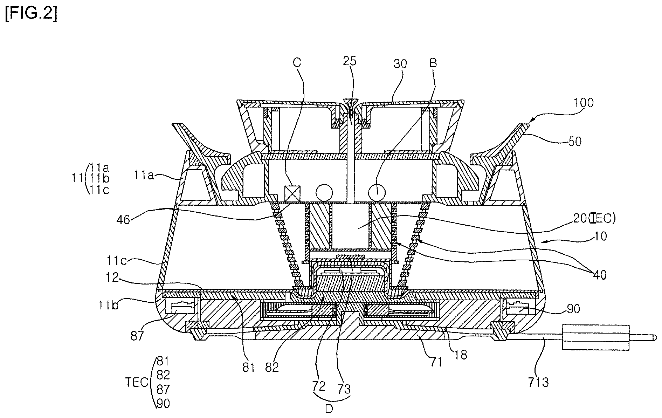

Referring to FIG. 1, the pet water dispenser according to an embodiment may include an inner assembly 100 detachably inserted into a water tank or storage chamber 10 to supply water from the water tank 10 to an outside. Referring to FIG. 2, the pet water dispenser may include the water tank 10 in which water is stored, a pump 20 installed or located in the water tank 10 to pump water stored in the water tank 10, a water supply pipe 25 connected to the pump 20, and a water supply plate or upper plate 30 over which water supplied from the water supply pipe 25 flows. The pump 20, the water supply pipe 25, the water supply plate 30, and the water guide 50 may be part of the inner assembly 100. The pump 20 may be an electronic device included in an inner electric component or chamber (IEC).

Between the water tank 10 and the water supply plate 30, a water guide or a water receiver 50 to catch water dropped from the water supply plate 30 and to guide the water back to the water storage tank 10 may be provided. The water guide 50 may also be referred to as a drip tray or splash guard. Accordingly, the water in the water tank 10 can be circulated through the pump 20, the water supply plate 30, the water guide 50, and back down to the water tank 10. In addition, a filter assembly 40 including at least one filter may be included in the inner assembly 100 to filter foreign substances contained in the water before the water stored in the water tank 10 flows into the pump 20.

The water tank 10 may include a wall 11 forming sides of the water tank 10 and a bottom plate 12 provided as a lower surface. An upper wall 11a and a container support 11b may be formed on upper and lower sides of a main or middle wall 11c, respectively. The bottom plate 12 may be provided between the main wall 11c and the container support 11b. The main wall 11c, the upper wall 11a, and the bottom plate 12 may define an area or container where water is stored, while the container support 11b may extend past the bottom plate 12 to partially define a base, or a space below the bottom plate 12 that is shielded from water. The water tank 10 may be formed in a cylindrical or truncated cone shape with a diameter that recedes from the bottom plate 12 to the top of the upper wall 11a, but may be formed in various shapes without being limited thereto.

The container support 11b may further include or couple to a base plate 18 spaced downward from the bottom plate 12. The container where water is stored may alternatively be referred to as a tank, and the sealed area below the container defined by the container support 11b and a base plate 18 may be referred to as a base of the tank.

A water tank electric component or chamber (TEC) may be provided in a space formed by the bottom plate 12, the base plate 18, and the container support 11b. The TEC may include electronic devices such as a thermoelectric element 81, a motor 82, a proximity sensor 87, and a power source sensor 90. The thermoelectric element 81 may be a Peltier device or a thermoelectric cooler (also known as a TEC). The thermoelectric element 81 may be used to heat or cool liquid in the container of the water tank 10.

The thermoelectric element 81 may be provided below the bottom plate 12 to control a temperature of the water stored in the water tank 10. The motor 82 may be positioned near a center of the thermoelectric element 81 to rotate a fan and dissipate heat generated in the thermoelectric element 81. The proximity sensor 87 may be accommodated in the container support 11b to detect whether a pet is approaching the pet water dispenser within a predetermined distance range. The power supply sensor 90 may be accommodated in the container support 11b to control or sense a power supply operation of the pet water dispenser.

However, the TEC is not limited to the configurations listed in the above specification and published in the drawings. For example, the TEC may further include a heat sink provided in a center of the thermoelectric element 81 to help dissipate heat and/or a water level sensor provided in a mounting space of the container support 11bThe inner assembly 100 may be inserted into the water tank 10 to be provided above the bottom plate 12 and may supply water from the water tank 10 to the water supply plate 30 by using the filter assembly 40, the pump 20, and the water supply pipe 25. The water supply pipe 25 may communicate with a hole in the center of the water supply plate 30 through which water is discharged.

In addition, the inner assembly 100 may include the IEC. For example, the pump 20 may be an IEC. However, the IEC is not limited to the configurations listed in the above specification and published in the drawings. Both the IEC and TEC may be or include electric components or devices that require power to operate.

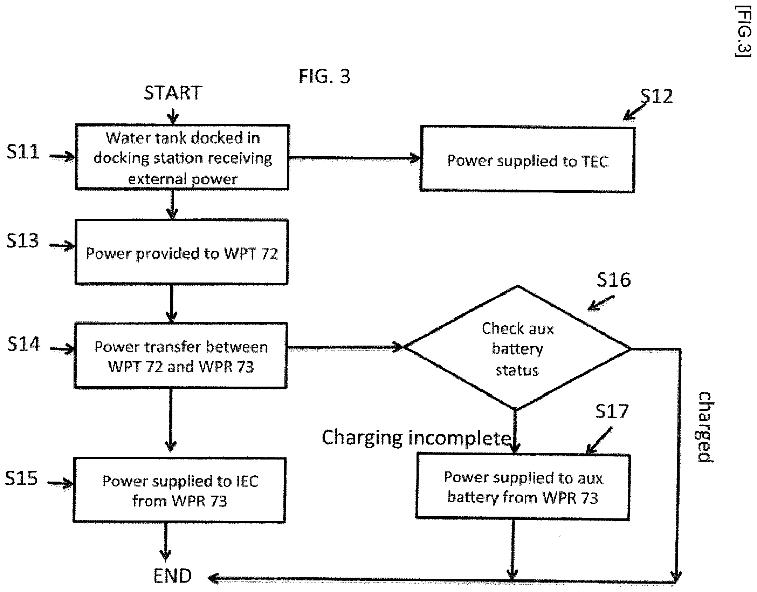

Referring FIG. 3, "upward" power transmission in which electric power (or power) is transmitted from an external commercial power source (or external power supply) to the IEC in the inner assembly 100 will be described. A "downward" power transmission will be described later.

External power may be supplied to a docking station 71 via an electrical wire 713. The docking station 71 may be electrically coupled to a bottom of the base plate 18 via, e.g., terminals or electrodes. The docking station 71 may have a power system configuration in which external power is directly applied by connecting the electrical wire 713, which may be drawn from the docking station 71, to the external commercial power source (e.g., socket). External power may be applied to the docking station 71, and in step S11, the docking station 71 may be connected to the water tank 10. A manner in which external power is applied to the docking station 71 may not be limited to the structure described in the above description or drawings. For example, external power may be applied to the docking station 71 via wireless power transfer.

The TEC may be electrically connected to the docking station 71 and may be operated by receiving external power by the docking station 71. In step S12, the external power applied to the docking station 71 may be supplied to the base plate 18 to operate the TEC.

The external power applied through the docking station 71 may then be transferred to the inner assembly 100 by a wireless power transmission device or assembly D. The wireless power transmission device D may include a first wireless power transfer device 72 (e.g., a wireless power transmitter and/or transceiver) and a second wireless power transfer device 73 (e.g., a wireless power receiver and/or transceiver) to wirelessly transmit power via wireless power transmission. In the "upward" or "normal" power transmission exemplified in FIG. 3, the first and second wireless power transfer devices may be a wireless power transmitter and receiver, respectively.

The wireless power transmitter 72 may be provided under the bottom plate 12 and electrically connected to the docking station 71. In step S13, power from the docking station 71 may be applied to the wireless power transmitter 72.

The wireless power receiver 73 may be arranged in the inner assembly 100 to have a position aligning or corresponding with a position of the wireless power transmitter 72. When power is applied to the wireless power transmitter 72 connected to the docking station 71, the wireless power transmitter 72 may generate an electromagnetic field, and a current may be induced in the wireless power receiver 73 from the electromagnetic field. In step S14, power is transmitted from the wireless power transmitter 72 to the wireless power receiver 73.

The IEC may be electrically connected to the wireless power receiver 73. In step S15, power may be transmitted from the wireless power receiver 73 to the IEC to operate the IEC.

In addition, an auxiliary battery B provided in the inner assembly 100 may be electrically connected to the wireless power receiver 73, and the wireless power receiver 73 may charge the auxiliary battery B. In step S16, a control unit or controller C may check whether the auxiliary battery B is fully charged. If the controller determines that the auxiliary battery B is not fully charged, in step S17, the wireless power receiver 73 may transmit power to the auxiliary battery B to charge the auxiliary battery B. An operation and control of the auxiliary battery B will be described later.

Referring to FIG. 3, "downward" or "reverse" power transmission of electric power (or power) may be transmitted from the inner assembly 100 to the TEC in the base plate 18. The pet water dispenser according to an embodiment may be capable of bi-directional power transmission, as opposed to unidirectional power transmission, from the base plate 18 to the IEC in the inner assembly 100 as well as from the inner assembly 100 to the TEC in the base plate 18.

Since the pet water dispenser according may be capable of bi-directional power transmission, an arrangement of the IEC and the TEC is not limited to the inner assembly 100 and the base plate 18. For example, certain sensors illustrated as being part of the TEC (e.g., the proximity sensor 87 or the thermoelectric element 81) may be provided in the inner assembly 100 or on the wall 11 of the water tank 10, while certain elements in the IEC (e.g., the auxiliary battery B or the controller C) may be provided in the base plate 18. Each of the electronic devices may be arranged without limitation in a position where function and efficiency may be maximized.

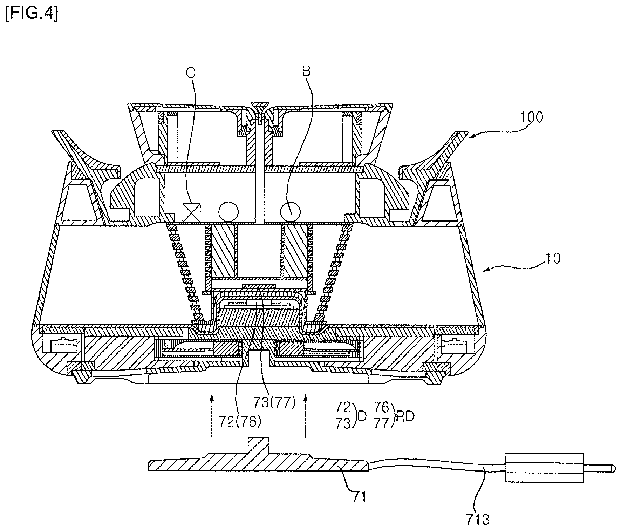

A bidirectional power transmission may be possible even when the docking station 71 is disconnected and external power is not transmitted due to the auxiliary battery B. FIG. 4 shows the docking station 71 decoupled from the base plate 18.

The auxiliary battery B may be provided in the inner assembly 100, and may charge or discharge. In this specification, "discharge" of the auxiliary battery B does not mean that all the electric power charged in the auxiliary battery B is depleted, but rather that at least some power is transmitted from the auxiliary battery B to the IEC or to a reverse wireless power transmission device RD. During a downward or reverse power transfer, the controller C may use the auxiliary battery B as a power source.

The auxiliary battery B may be electrically connected to the TEC so that the TEC may be operated by electric power supplied from the auxiliary battery B when the auxiliary battery B is discharged. The auxiliary battery B may also transmit power to a reverse wireless power transmission device (RD). As previously described, the auxiliary batter B may also operate the IEC.

The reverse wireless power transfer device RD may include a third wireless power transfer device 77 (e.g., a reverse or second wireless power transmitter or transceiver 77) and a fourth wireless power transfer device 76 (e.g., a reverse or second wireless power receiver or transceiver) to transmit power wirelessly. An operation principle of the reverse wireless power transfer device RD may be substantially the same as an operation of the wireless power transfer device D. For convenience of description, the third and fourth wireless power transfer devices 77 and 76 may be a reverse wireless power transmitter and receiver, respectively. The reverse wireless power transmitter 77 may generate an electromagnetic field, which may induce a current in the reverse wireless power receiver 76.

The reverse wireless power transmitter 77 may be electrically connected to the auxiliary battery B and provided in the inner assembly 100. The reverse wireless power receiver 76 may be arranged below the bottom plate 12 and aligned with the reverse wireless power transmitter 77.

Further, the reverse wireless power transmitter 77 may be provided in a same space as the wireless power receiver 73, and the reverse wireless power receiver 76 may be provided in a same space as the wireless power transmitter 72. However, an arrangement of the reverse wireless power transfer device RD and the wireless power transfer device D is not limited thereto, and can be designed and changed to implement bidirectional power transfer.

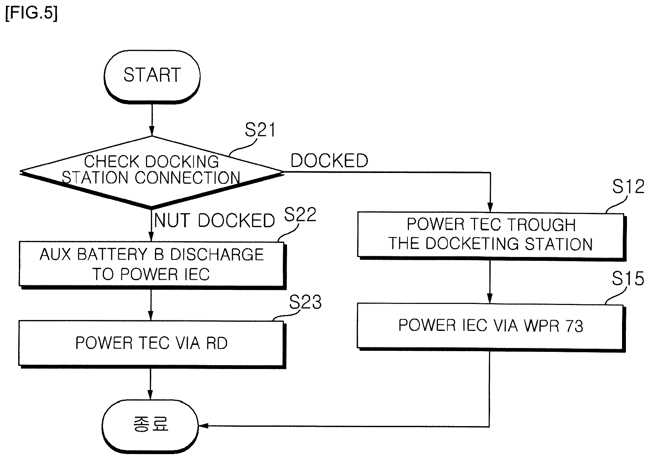

Referring to FIG. 5, in step S21, connection information between the base plate 18 and the docking station 71 may be checked. If the docking station 71 and the base plate 18 are connected, then the docking station 71 may power the TEC (S12) and the wireless power transmitter 72 may transmit power to the wireless power receiver 73 to operate the IEC (S15), as previously described with reference to FIG. 3. However, if the docking station 71 and the base plate 18 are not connected, as in FIG. 4, then, in step S22, the auxiliary battery B may transmit power to the IEC and the reverse wireless power transmitter 77 in step S22. The reverse wireless power transmitter 77 may transmit power to the reverse wireless power receiver 76, and the reverse wireless power receiver 76 may be electrically connected to the TEC. In step S23, power from the reverse wireless power receiver 76 may operate the TEC.

The reverse wireless power transmission by the auxiliary battery B and the reverse wireless power transfer device RD may be controlled by the controller C based on connection information of the docking station 71. The controller C may sense connection information of the docking station 71 and perform reverse wireless power transmission when the controller determines that the docking station 71 or the wire 713 is disconnected and/or the controller C receives a separation signal to indicate that the pet water dispenser is in a "separation state".

The connection information may include information on whether the water tank 10 and the docking station 71 are electrically coupled, and the controller C may determine whether the docking station 71 and the base plate 18 are connected or whether the wire 713 is connected to the docking station 71, and/or may receive a separation signal or a connection signal to determine separation or connection states. The controller C may receive a connection signal when the water tank 10 and the docking station 71 are electrically coupled such that power is supplied by the external power supply, and may further determine that the pet water dispenser is in a "connection state". The controller C may receive a separation signal when the water tank 10 and the docking station 71 are not electrically coupled, or when an external power supply has been disconnected from the docking station 71 (by, e.g., a disconnection of the wire 713), and may further determine that the pet water dispenser is in a "separation state".

The controller C may sense the connection information by measuring a first sensing current 11 transmitted from the wireless power transmitter 72 to the wireless power receiver 73 when the wireless power transmitter is electrically connected to the docking station 71. A first test power amount, current, or signal may be transmitted from the docking station 71 to the wireless power transmitter 72 to ensure a risk of shock is low when external power is supplied by the docking station 71.

The first test signal transmitted to the wireless power transmitter 72 may then be transmitted to the wireless power receiver 73, and the controller C may receive the first test signal from the wireless power receiver 73 and determine the connection information by measuring the first sensing current 11.

The controller C may convert the connection information into the separation signal if the first sensing current I1 is less than the a predetermined first reference current Is1. If the first sensing current 11 is less than the predetermined first reference current Is1, the controller C may determine that there is little or no external power applied to the docking station 71 or that the docking station 71 has been disconnected from the base plate 18. The controller C may further determine that the pet water dispenser is in the connection state.

The controller C may convert the connection information into the connection signal if the first sensing current 11 is equal to or greater than the first predetermined reference current Is1. If the first sensing current I1 is greater than or equal to the first predetermined reference current Is1, the controller C may determine that the docking station 71 and the base plate 18 are electrically and perfectly coupled and that external power is being applied properly to the docking station 71. The controller C may further determine that the pet water dispenser is in the separation state.

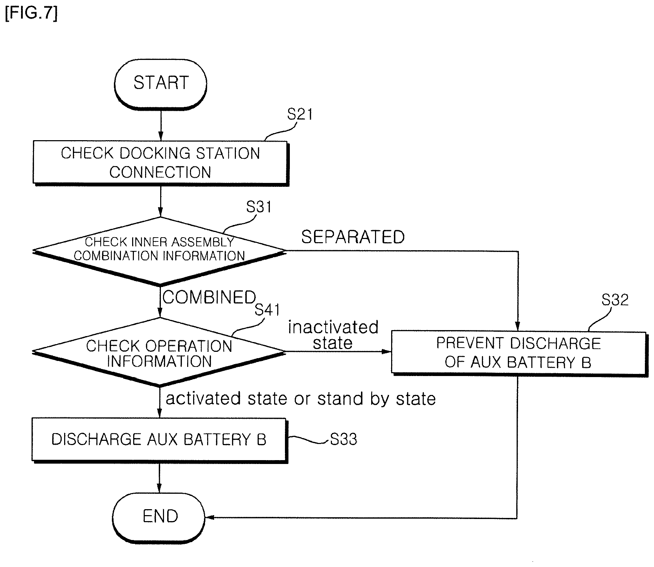

When the controller C determines, based on the connection information, that the pet water dispenser is in the connection state, the controller C may charge the auxiliary battery B and use power from the docking station 71 to operate the TEC and power from the wireless power receiver 73 to operate the IEC. When the controller C determines, based on the connection information, that the pet water dispenser is in the separation state, the controller C may discharge the auxiliary battery B to operate both the TEC and the IEC. An operation of the controller C will be described in more detail with reference to FIG. 7.

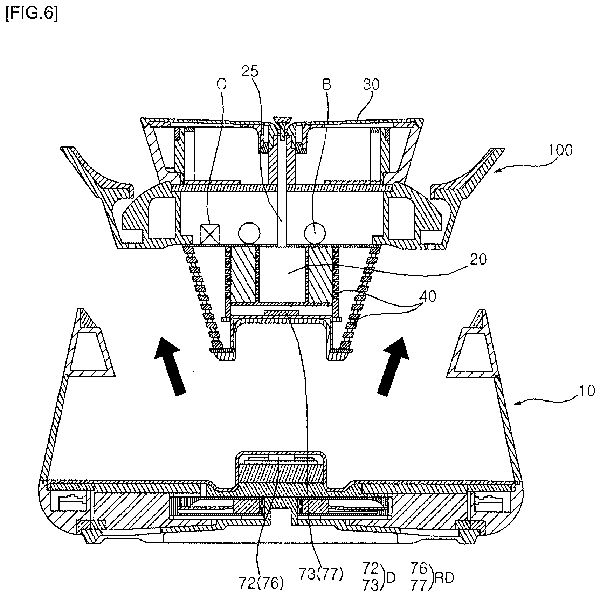

Referring to FIG. 6, when the user lifts the inner assembly 100, the inner assembly 100 may be separated from the water tank 10. When the inner assembly 100 is inserted into the water tank 10, the inner assembly 100 and the water tank 10 may be combined. The user may remove the inner assembly 100 from the water tray 10 to exchange or replace the water stored in the water tank 10 or to repair the water tank 10 and/or the inner assembly 100. The pump 20, the water supply pipe 25, the water supply plate 30, and the filter assembly 40 may be combined to form a single inner assembly 100.

The controller C may also be able to determine when the inner assembly 100 is connected to the water tank 10, and control the discharge of the auxiliary battery B based on such combination information. When the inner assembly 100 is disassembled for maintenance or repair, it is possible to prevent a user from electric shock by restricting a discharge of the auxiliary battery B.

The controller C may be able to distinguish between a case where the docking station 71 is disconnected from the water tank 10 or when external power is cut off (based on connection information), and a case where the inner assembly 100 is decoupled from the water tank 10 (based on combination information). The controller C may restrict discharge of the auxiliary battery B in the latter case to prevent electric shock.

When the water tank 10 and the inner assembly 100 are combined but the docking station 71 is disconnected, the auxiliary battery B may be discharged to operate the IEC and the TEC. On the contrary, if the water tank 10 and the inner assembly 100 are separated, the discharge of the auxiliary battery B is restricted.

Referring to FIG. 7, the controller C may sense combination information of the water tank 10 and the inner assembly 100, and determine whether the pet water dispenser is in a "combined state" when the inner assembly 100 is inserted into the water tank 10 or whether the pet water dispenser is in a "decoupled state" when the inner assembly 100 is separated from the water tank 10. First, in step S26, the controller C may check whether the docking station 71 is connected to the base plate 18 via the first sensing current I1 in the process described with reference to FIGs. 4-5.

The controller C may then sense combination information between the water tank 10 and the inner assembly 100 in step S31 by measuring a second sensing current I2 transmitted through the reverse wireless power transfer device RD and the wireless power transfer device D. The reverse wireless power receiver 76 and the wireless power transmitter 72 may be electrically connected, and the reverse wireless power transmitter 77 and the wireless power receiver 73 may also be electrically connected. Thus, the controller C, the auxiliary battery B, the wireless power transfer device D and the reverse wireless power transfer device RD may form a connected closed circuit.

The controller C may transmit a second test power first amount, current, or signal to the reverse wireless power transfer device RD to such a small extent that it does not interfere with or cause an electric shock from the auxiliary battery B. The wireless power transfer device D may receive the second test signal from the reverse wireless power transfer device RD, and the controller C may receive the second test signal from the wireless power receiver 73. The controller C may then measure the second sensing current I2 to determine the combination information.

The controller C may convert the combination information to a decoupling signal if the second sensing current 12 is less than a second predetermined reference current Is2. If the second sensing current I2 is less than the second predetermined reference current Is2, the controller C may determine that the inner assembly 100 and the water tank 10 are separated or not completed connected, and may further determine that the pet water dispenser is in a decoupled state.

If the controller C determines in step S31 that the pet water assembly is in a decoupled state, in step S32, the controller C may limit the discharge of the auxiliary battery B to prevent electric shock to the user. The controller C may prevent the auxiliary battery B from discharging in step S32.

If the second sensing current I2 is equal to or greater than the second predetermined reference current Is2, the controller may convert the combination information to a combination signal. If the second sensing current I2 is higher than the second predetermined reference current Is2, the controller C may determine that the inner assembly 100 and the water tank 10 are coupled, and further determine that the pet water dispenser is in the combined or coupled state.

If the controller C in step S31 determines that the pet water dispenser is in the combined or coupled state, in step S41, the controller C may further check operation information described later. Then, in step S33, the controller C may discharge the auxiliary battery B for operation of the IEC and TEC. An amount of discharge of the auxiliary batter B may be determined based on the operation information from step S41 described later.

The pet water dispenser according to an embodiment may determine connection information and combination information using the first sensing current I1 and the second sensing current I2. There is no need for a separate sensing structure or device to sense the connection information and the combination information, simplifying a structure. Since information is acquired by using a current, the controller C may quickly determine a connection or coupling state of the pet water dispenser. Since a relatively small amount of power is used to acquire the connection and combination information, power management of the auxiliary battery B can be carried out easily.

The controller C may further control a discharge of the auxiliary battery B according to operation information, thereby customizing power consumption based on different uses or states of the pet water dispenser. The power of the auxiliary battery B may be efficiently utilized.

In step S41, the controller C may further determine operation information based on a power supply sensor 90. Operation information may be designated by the user via a user interface (not shown) provided on the container support 11b of the water tank 10 or based on the sensors (e.g., whether a pet is approaching the pet water dispenser based on the proximity sensor 87). Operation information may consist primarily of an activated state, a standby state, and an inactivated state. In the activated state, the auxiliary battery B may be discharged. In the standby state, the auxiliary battery B may be discharged by a lesser amount than in the activated state, and may require a further condition (such as pet proximity) to continue to discharge the auxiliary battery B. In the inactivated state, discharge of the auxiliary battery B may be limited or prevented. Operation information may further depend on a connection state of the docking station 71 and the water tank 10. If the pet water dispenser is in a connected state, then discharge of the auxiliary battery B may be limited, as the pet water dispenser may be powered primarily by external power and the wireless power transmission device D.

If a user specifies that the pet water dispenser is in an activated state or if the controller determines that a pet is within a predetermined distance range from the proximity sensor 87 in a standby state, the controller C may proceed to step S33 and discharge the auxiliary battery B. If the user specifies that the pet water dispenser is in an inactivated state, if the controller determines that a pet is not within the predetermined distance range from the proximity sensor 87 in the standby state, or if the controller C determines that the pet water dispenser is in a connected state based on the first sensing current I1 (where external power is applied to the pet water dispenser), the controller C may proceed to step S32 and limit discharge of the auxiliary battery B such that the external power from the external power supply operates the pet water dispenser (i.e., in a normal operation). These possibilities will be described in detail below.

The user may specify the operation information by using the power supply sensor 90. The operation information may include an activation signal indicating an activated state of the pet water dispenser, a standby signal indicating a standby state of the pet water dispenser, and an inactivated signal indicating an inactivated state of the pet water dispenser.

Upon receiving the operation signal from the power supply sensor 90, the controller C may discharge the auxiliary battery B without any additional condition to supply power to the IEC and the TEC of the inner assembly 100 and the base plate 18. Upon receiving the inactivated signal, the controller C may limit the discharge of the auxiliary battery B, thus deactivating the IEC and the TEC.

Upon receiving the standby signal, the controller may supply standby (i.e. a small amount of) power from the auxiliary battery B to the TEC and the IEC, and may wait to activate or operate the TEC or IEC based on proximity information of the pet sensed by the proximity sensor 87. The standby power may be a power amount that is lower than an amount of an operating power used to operate the TEC and the IEC, and the standby power may be large enough amount to maintain the TEC and the IEC in a standby state before activation (i.e., a state where the TEC and IEC may be ready to operate quickly after a condition is met).

The controller C may supply the operating power when the controller C determines, based on the proximity information sensed by the proximity sensor 87, that a pet is approaching the pet water dispenser in a predetermined distance range. When the controller C determines that a pet is no longer approaching and/or present within the predetermined distance range, the controller C may supply the standby power again.

A discharge amount of the auxiliary battery B may be controlled based on whether a pet is using the pet water dispenser so that the power of the auxiliary battery B may be used efficiently. The controller C may also prevent the discharge of the auxiliary battery B if the external power is supplied through the docking station.

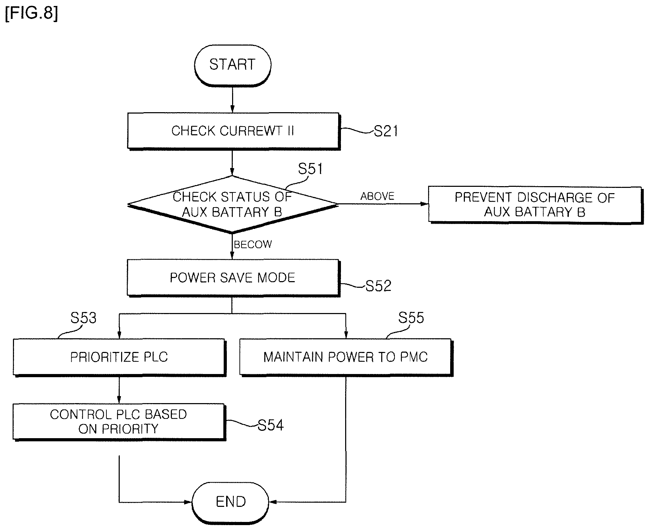

In addition, referring to FIG. 8, the pet water dispenser may control a discharge of the auxiliary battery B based on a charging rate or charge amount of the auxiliary battery B. In step S21, the controller C may determine connection information between the docking station 71 and the water tank 10. If the controller C determines in step S21 that the pet water dispenser is in the disconnected state, the controller C may proceed to measure a charging rate of the auxiliary battery B in step S51, and may enter a power saving mode (step S52) when the charging rate is less than a predetermined reference charging rate, which may be designated by the user and changed after designation. Alternatively, the controller C may measure a charge amount of the auxiliary battery B in step S51, and may enter a power saving mode (step S52) when the charge amount is less than a predetermined reference charge amount, which may be designated by the user and changed after designation. When the controller measures a charge rate or charge amount equal to or greater than the predetermined reference charge rate or amount, the controller C may carry out an operation as in FIG. 7, limiting a discharge of the auxiliary battery B in step S32 if the inner assembly 100 is decoupled from the water tank 10.

However, if the charging rate or charge amount is less than the predetermined reference charge rate or amount, the controller C may enter the power saving mode in step S52. In the power saving mode, the controller C may limit the power supplied to at least one of the TEC and the IEC by the auxiliary battery B. In the power-saving mode, the controller C may first classify the plurality of electronic components or devices in the TEC and/or IEC into power-maintaining components or devices and power-limiting components or devices (step S52).

Power-maintaining components may be electronic devices that continue to receive power during the power saving mode, such as the pump 20 and the wireless power transmitter and receiver 72 and 73. Power-limiting components may be electronic devices that receive limited or no power during the power saving omde, such as the proximity sensor 87 and the thermoelectric element 81. The classification of "power-maintaining devices" may also be referred to as "first devices" while the classification of "power-limiting devices" may also be referred to as "second devices." The controller C may then proceed to selectively operate electronic devices of the pet water dispenser according to importance and necessity. The user may classify devices via a user interface or input module (not shown) provided on the container support 11b.

The controller C may maintain power supply to the power-maintaining devices in step S55. In step S53, the controller C may order the power-limiting devices in order of power consumption or priority. The controller C may reclassify the power-limiting devices by taking into consideration the power usage and the functional importance of each device and place the electronic devices classified as "power-limiting" in a "power limitation" order, and in step S54, the controller may control or prioritize power supply in order of the power limitation order determined in step S53. In addition, the user may rearrange the power limitation order, and the controller C may control an operation of the pet water dispenser according to the user's selected power limitation order in step S54.

Embodiments disclosed herein may be implemented as a liquid dispenser that supplies drinking water to an animal such as a pet. However, embodiments disclosed herein are not limited to pets. For example, the liquid dispenser may be used in a zoo to supply drinking water to animals kept in a zoo, research areas, wildlife preservation areas, etc.

Embodiments disclosed herein may be implemented as a pet water dispenser capable of bidirectional power supply between a water tank or base of a water tank and an inner assembly, maximizing possibilities of positions and functions of electronic components or devices.

The pet water dispenser may implement a method for controlling electric power by based on an application of external electric power and an external situation, and may distinguish between a case when the external electric power is unintentionally cut off and a case where the external electric power is purposefully cut off for repair or maintenance. The pet water dispenser may vary power supply to components or devices according to a charging rate or amount of an auxiliary battery or battery. The pet water dispenser may solve all the problems that may be caused or predicted from the related art, in addition to the technical problems described above.

A pet water dispenser may include a power supply capable of bi-directional wireless power transfer between a water tank and an inner assembly located within the water tank. The power supply may include a docking station, a secondary or auxiliary battery, a wireless power transfer device, a reverse wireless power transfer device, and a control unit or controller.

The docking station may be provided below a bottom plate of the water tank, and external power may be applied thereto. The auxiliary battery may be accommodated in the inner assembly. The reverse wireless power transmission device may be electrically connected to the auxiliary battery and a water tank electronic component or chamber or base electronic component or chamber provided under the water tank in a base and using electric power, respectively. The controller may sense connection information of the docking station and supply power from the auxiliary battery to the water tank electronic component through the reverse wireless power transmission device when the connection information includes a separation signal indicating a separation state.

The inner assembly may further include an inner electronic component or chamber that consumes power. The wireless power transmission device may further include a wireless power transmitter and a wireless power receiver to supply power from the docking station to the inner electronic component. The reverse wireless power transmission device may include a reverse wireless power transmitter and a reverse wireless power receiver. The reverse wireless power transmitter may be provided in the inner assembly, and the reverse wireless power receiver may be provided below the bottom plate. The reverse wireless power receiver and the reverse wireless power transmitter may be aligned to correspond to each other.

The wireless power transfer device may include a wireless power transmission unit or transmitter and a wireless power receiver or receiving unit. The wireless power transmitter may be provided below the bottom plate, and the wireless power receiver may be provided within the inner assembly. The wireless power receiver and the wireless power transmitter may be aligned to correspond to each other.

The controller may sense connection information by measuring a first sensing current transmitted from the wireless power transmitter connected to the docking station to the wireless power receiver. The controller may interpret the connection information as a separation signal when the first sensing current is less than a first reference or predetermined current. If the first sensing current is equal to or greater than the first reference current, the connection information may be interpreted as a connection signal indicating a connection state.

Embodiments disclosed herein may include a power supply of a pet water dispenser may include a docking station, a secondary or auxiliary battery, and a control unit or controller. The control unit may detect coupling information of a water tank and an inner assembly based on a separation or decoupling signal of the docking station and may discharge the auxiliary battery when the coupling information includes a coupling signal indicating a coupling state of the pet water dispenser.

The power supply may further include a wireless power transmission or transfer device. The wireless power transmission device may include a wireless power transmission unit or transmitter and a wireless power reception unit or receiver. The wireless power transmission unit may be provided below a bottom plate, and the wireless power receiving unit may be provided within the inner assembly. The wireless power receiving unit and the wireless power transmitting unit may be aligned to correspond to each other.

The power supply may further include a reverse wireless power transfer device. The reverse wireless power transfer device may include a reverse wireless power transmission unit or transmitter and a reverse wireless power reception unit or receiver. The reverse wireless power transmission unit may be provided in the inner assembly, and the reverse wireless power reception unit may be provided below the bottom plate. The reverse wireless power reception unit and the reverse wireless power transmitting unit may be aligned to correspond to each other.

The reverse wireless power transmission unit may be electrically connected to the auxiliary battery. The reverse wireless power reception unit may be electrically connected to the wireless power transmission unit.

The controller may sense coupling or combination information by measuring a second sensing current transmitted through the reverse wireless power transmission device and the wireless power transmission device connected to the auxiliary battery.

If the second sensing current is less than a second reference or predetermined current, the controller may interpret the combination information as a separation signal indicating a separation state between the water tank and the inner assembly. If the second sensing current is equal to or greater than the second reference current, the combining information may be interpreted as the combining signal indicating a coupling state between the water tank and the water assembly. The controller may limit the discharge of the auxiliary battery when the combination information includes the separation signal.

The controller may sense operation information based on the combination signal or other operation information. When the operation information includes an operation, activation, or actuated signal and a standby signal, the auxiliary battery discharge can be maintained. When the operation information includes an unactivated, unactuated, or inactivated signal, the auxiliary battery discharge can be limited.

An activation signal may immediately activate the inner assembly. The standby signal may conditionally activate the inner assembly. The inactivated signal may deactivate the inner assembly. The controller may supply operating power from the auxiliary battery when the operation information includes an operation or activated signal. When the operation information includes a standby signal, standby power can be supplied from the auxiliary battery. The operating power may be greater than the standby power.

Embodiments disclosed herein may include a power supply of the pet water dispenser may include an auxiliary battery, a reverse wireless power transmitter, and a reverse wireless power receiver. The reverse wireless power transmitter may be electrically connected to the auxiliary battery. The reverse wireless power receiver may be provided below the bottom plate of the water tank or tub.

A water tank electronic component or chamber may be provided below the bottom plate and use electric power. An inner electronic component or chamber may be accommodated in the inner assembly and use electric power. The power supply may further include a control unit or controller. The control unit may measure a charging rate or amount of the auxiliary battery.

When the charging rate or amount is less than a reference charging rate or amount, a power saving mode may be entered, and power to be supplied to at least one of the electronic components or devices (i.e., in the water tank electronic component and/or in the inner electronic component) may be limited. The control unit may classify the plurality of electronic parts, components, or devices into power-maintaining parts, components, or devices and power-limiting parts, components, or devices.

The control unit may limit the power supply to the power limiting components in the power saving mode, and maintain the power supply to the power maintaining components. The control unit may reclassify the power limiting components in order of power limitation.

Embodiments disclosed herein may include a bi-directional power supply between a water tank and an inner assembly, including a secondary or auxiliary battery and a reverse wireless power transfer device. Therefore, water tank electronic components can be arranged in the water tank or in the inner assembly. Furthermore, the water tank electronic components can be operated without external power, so that the usability can be improved without limitation of function.

The pet water dispenser may detect coupling or combination information of the inner assembly and the water tank to control a discharge of the auxiliary battery, thereby preventing electric shock when the inner assembly is separated from the water tank for repair or cleaning. The pet water dispenser may efficiently use the power of the auxiliary battery by controlling the electric power supply according to the charging rate or amount of the auxiliary battery.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

The scope of the present invention is defined by the features specified in the appended claims.

## Claims

1. A liquid dispenser for animals, including:
a tank (10) including a bottom, and a wall extending upward from the bottom;
a base (18) provided below the bottom of the tank (10);
at least one first electronic device (81, 82, 87, 90) provided in the base (18) and operated via electric power;
an inner assembly (100) that is removable from the tank (10), the inner assembly (100) having an outlet for dispensing liquid from the tank (10); and
a power supply assembly configured to transmit and receive wireless power in both directions between the base (18) and inner assembly (100), the power supply assembly including:
a docking station (71) configured to receive external power, the docking station (71) being provided below the base (18),
a battery (B) provided in the inner assembly (100),
a first wireless power transfer device (72) electrically connected to the battery (B) and the at least one first electronic device, and
a controller (C) configured to control the battery (B) to supply power to the first electronic device (81, 82, 87, 90) via the first wireless power transfer device (72) when the docking station (71) is not connected to the base (18) or not receiving external power.

2. The liquid dispenser of claim 1, further including:
at least one second electronic device (81, 82, 87, 90) provided in the inner assembly (100) and operated via electric power, the inner assembly (100) being provided above the base (18) when the inner assembly (100) is coupled to the tank (10); and,
a second wireless power transfer device (73) included in the power supply assembly to supply power from the docking station (71) to the at least one second electronic device (81, 82, 87, 90).

3. The liquid dispenser of claim 1 or 2, wherein the first wireless power transfer device (72) includes a first wireless power transmitter provided in the inner assembly (100) and a first wireless power receiver provided in the base (18) of the tank (10) at a position aligning with a position of the first wireless power transmitter.

4. The liquid dispenser of any one of claims 1 to 3, wherein the second wireless power transfer device (73) includes a second wireless power transmitter provided between inner and outer bottoms of the tank (10) and a second wireless power receiver provided in the inner assembly (100) at a position aligning with a position of the second wireless power transmitter.

5. The liquid dispenser of claim 3 or 4, wherein the first wireless power transmitter is connected to the docking station (71), and the controller (C) measures a sensing current transmitted from the first wireless power transmitter to the first wireless power receiver to sense whether the docking station (71) is connected to the base (18) and receiving external power.

6. The liquid dispenser of claim 5, wherein the controller (C) determines that the docking station (71) is not connected to the base (18) or is not receiving external power when the sensing current is less than a predetermined reference current, and the controller (C) determines that the docking station (71) is connected to the base (18) and is receiving external power if the sensing current is equal to or greater than the predetermined reference current.

7. The liquid dispenser of any one of claims 1 to 6, wherein the controller (C) is configured to determine whether the tank (10) and the inner assembly (100) are coupled, wherein, when the controller (C) determines that the inner assembly (100) and the tank (10) are not coupled to each other, the controller (C) limits a discharge of the battery (B).

8. The liquid dispenser of any one of claims 4 to 7 insofar as dependent on claim 4, wherein the second wireless power transmitter and the first wireless power receiver are electrically connected to the battery (B), and wherein the second wireless power receiver is electrically connected to the first wireless power transmitter.

9. The liquid dispenser of any one of claims 4 to 8 insofar as dependent on claim 4, wherein the controller (C) measures a sensing current transmitted through the second wireless power transmitter and the first wireless power transmitter to determine whether the tank (10) and the inner assembly (10) are coupled.

10. The liquid dispenser of claim 9, wherein the controller (C) determines that the inner assembly (100) and the tank (10) are not coupled if the sensing current is less than a predetermined reference current and determines that the inner assembly (100) and the tank (10) are coupled if the sensing current is equal to or greater than the predetermined reference current.

11. The liquid dispenser of any one of claims 1 to 10, wherein when the controller (C) determines that the inner assembly (100) and the tank (10) are coupled, and also determines that the docking station (71) is not receiving external power, the controller (C) discharges the battery (B) to provide power to at least one electronic device (81, 82, 87, 90).

12. The liquid dispenser of any one of claims 1 to 11, wherein the controller (C) further detects operation information based on a received activation signal, standby signal, or inactivation signal, wherein the controller (C) discharges the battery (B) upon receiving the activation signal or the standby signal, and limits a discharge of the battery (B) upon receiving the inactivation signal.

13. The liquid dispenser of claim 12, wherein the controller (C) discharges the battery (B) upon receiving the activation signal to power at least one electronic device (81, 82, 87, 90) provided in at least one of the inner assembly (100) or below the bottom (18) of the tank (10), wherein the controller (C) discharges the battery (B) upon receiving the standby signal to prepare to power the at least one electronic device (81, 82, 87, 90) if another condition is met, and limits discharge of the battery (B) upon receiving the inactivation signal.

14. The liquid dispenser of claim 12 or 13, wherein the controller (C) discharges the battery (B) by a first amount upon receiving the activation signal, and wherein the controller (C) discharges the battery (B) by a second amount less than the first amount upon receiving the standby signal.

15. The liquid dispenser of one of any one of claims 2 to 14 insofar as dependent on claim 2,
wherein the controller (C) measures a charge rate of the battery (B) and enters a power saving mode when the charge rate is less than a predetermined reference charge rate, and limits power supplied from the battery (B) to at least one of the first or second electronic devices (81, 82, 87, 90) in the power saving mode,
wherein, in the power saving mode, the controller (C) classifies each of the electronic devices (81, 82, 87, 90) in the plurality of electronic devices as a first device or a second device, and continues to supply power to each electronic device classified as a first device but limits power supplied to each electronic device classified as a second device.

## Patentansprüche

1. Flüssigkeitsspender für Tiere, der aufweist:
einen Behälter (10), der einen Boden und eine Wand aufweist, die sich vom Boden nach oben erstreckt;
eine Basis (18), die unter dem Boden des Behälters (10) vorgesehen ist;
mindestens eine erste elektronische Vorrichtung (81, 82, 87, 90), die in der Basis (18) vorgesehen ist und mit elektrischem Strom betrieben wird;
eine innere Anordnung (100), die aus dem Behälter (10) herausnehmbar ist, wobei die innere Anordnung (100) einen Auslass zum Spenden von Flüssigkeit aus dem Behälter (10) aufweist; und
eine Stromversorgungsanordnung, die konfiguriert ist, drahtlos Strom in beiden Richtungen zwischen der Basis (18) und der inneren Anordnung (100) zu senden und zu empfangen, wobei die Stromversorgungsanordnung aufweist:
eine Andockstation (71), die konfiguriert ist, externen Strom zu empfangen, wobei die Andockstation (71) unter der Basis (18) vorgesehen ist,
eine Batterie (B), die in der inneren Anordnung (100) vorgesehen ist,
eine erste drahtlose Stromübertragungsvorrichtung (72), die elektrisch mit der Batterie (B) und der mindestens einen ersten elektronischen Vorrichtung verbunden ist, und eine Steuerung (C), die konfiguriert ist, die Batterie (B) zu steuern, um die erste elektronische Vorrichtung (81, 82, 87, 90) über die erste drahtlose Stromübertragungsvorrichtung (72) mit Strom zu versorgen, wenn die Andockstation (71) nicht mit der Basis (18) verbunden ist oder keinen externen Strom empfängt.

2. Flüssigkeitsspender nach Anspruch 1, der ferner aufweist:
mindestens eine zweite elektronische Vorrichtung (81, 82, 87, 90), die in der inneren Anordnung (100) vorgesehen ist und über elektrischen Strom betrieben wird, wobei die innere Anordnung (100) über der Basis (18) vorgesehen ist, wenn die innere Anordnung (100) mit dem Behälter (10) gekoppelt ist; und,
eine zweite drahtlose Stromübertragungsvorrichtung (73), die in der Stromversorgungsanordnung enthalten ist, um Strom von der Andockstation (71) an die mindestens eine zweite elektronische Vorrichtung (81, 82, 87, 90) zu liefern.

3. Flüssigkeitsspender nach Anspruch 1 oder 2, wobei die erste drahtlose Stromübertragungsvorrichtung (72) einen ersten drahtlosen Stromsender, der in der inneren Anordnung (100) vorgesehen ist, und einen ersten drahtlosen Stromempfänger aufweist, der in der Basis (18) des Behälters (10) an einer Position vorgesehen ist, die mit einer Position des ersten drahtlosen Stromsenders ausgerichtet ist.

4. Flüssigkeitsspender nach einem der Ansprüche 1 bis 3, wobei die zweite drahtlose Stromübertragungsvorrichtung (73) einen zweiten drahtlosen Stromsender, der zwischen inneren und äußeren Böden des Behälters (10) vorgesehen ist, und einen zweiten drahtlosen Stromempfänger aufweist, der in der inneren Anordnung (100) an einer Position vorgesehen ist, die mit einer Position des zweiten drahtlosen Stromsenders ausgerichtet ist.

5. Flüssigkeitsspender nach Anspruch 3 oder 4, wobei der erste drahtlose Stromsender mit der Andockstation (71) verbunden ist und die Steuerung (C) einen vom ersten drahtlosen Stromsender zum ersten drahtlosen Stromempfänger übertragenen Messstrom misst, um festzustellen, ob die Andockstation (71) mit der Basis (18) verbunden ist und externen Strom empfängt.

6. Flüssigkeitsspender nach Anspruch 5, wobei die Steuerung (C) feststellt, dass die Andockstation (71) nicht mit der Basis (18) verbunden ist oder keinen externen Strom empfängt, wenn der Messstrom kleiner als ein vorbestimmter Referenzstrom ist, und die Steuerung (C) feststellt, dass die Andockstation (71) mit der Basis (18) verbunden ist und externen Strom empfängt, wenn der Messstrom gleich oder größer als der vorbestimmte Referenzstrom ist.

7. Flüssigkeitsspender nach einem der Ansprüche 1 bis 6, wobei die Steuerung (C) konfiguriert ist, festzustellen, ob der Behälter (10) und die innere Anordnung (100) miteinander gekoppelt sind, wobei, wenn die Steuerung (C) feststellt, dass die innere Anordnung (100) und der Behälter (10) nicht miteinander gekoppelt sind, die Steuerung (C) eine Entladung der Batterie (B) begrenzt.

8. Flüssigkeitsspender nach einem der Ansprüche 4 bis 7, insofern von Anspruch 4 abhängig, wobei der zweite drahtlose Stromsender und der erste drahtlose Stromempfänger elektrisch mit der Batterie (B) verbunden sind, und wobei der zweite drahtlose Stromempfänger elektrisch mit dem ersten drahtlosen Stromsender verbunden ist.

9. Flüssigkeitsspender nach einem der Ansprüche 4 bis 8, insofern von Anspruch 4 abhängig, wobei die Steuerung (C) einen durch den zweiten drahtlosen Stromsender und den ersten drahtlosen Stromsender übertragenen Messstrom misst, um festzustellen, ob der Behälter (10) und die innere Anordnung (10) gekoppelt sind.

10. Flüssigkeitsspender nach Anspruch 9, wobei die Steuerung (C) feststellt, dass die innere Anordnung (100) und der Behälter (10) nicht gekoppelt sind, wenn der Messstrom kleiner als ein vorbestimmter Referenzstrom ist, und feststellt, dass die innere Anordnung (100) und der Behälter (10) gekoppelt sind, wenn der Messstrom gleich oder größer als der vorbestimmte Referenzstrom ist.

11. Flüssigkeitsspender nach einem der Ansprüche 1 bis 10, wobei, wenn die Steuerung (C) feststellt, dass die Innenanordnung (100) und der Behälter (10) gekoppelt sind, und außerdem feststellt, dass die Andockstation (71) keinen externen Strom erhält, die Steuerung (C) die Batterie (B) entlädt, um mindestens eine elektronische Vorrichtung (81, 82, 87, 90) mit Strom zu versorgen.

12. Flüssigkeitsspender nach einem der Ansprüche 1 bis 11, wobei die Steuerung (C) ferner Betriebsinformationen basierend auf einem empfangenen Aktivierungssignal, Bereitschaftssignal oder Inaktivierungssignal erfasst, wobei die Steuerung (C) die Batterie (B) beim Empfang des Aktivierungssignals oder des Bereitschaftssignals entlädt und eine Entladung der Batterie (B) beim Empfang des Inaktivierungssignals begrenzt.

13. Flüssigkeitsspender nach Anspruch 12, wobei die Steuerung (C) die Batterie (B) beim Empfang des Aktivierungssignals entlädt, um mindestens eine elektronische Vorrichtung (81, 82, 87, 90) zu versorgen, die in der inneren Anordnung (100) und/oder unter dem Boden (18) des Behälters (10) vorgesehen ist, wobei die Steuerung (C) die Batterie (B) beim Empfang des Bereitschaftssignals entlädt, um die Stromversorgung der mindestens einen elektronischen Vorrichtung (81, 82, 87, 90) vorzubereiten, wenn eine andere Bedingung erfüllt ist, und die Entladung der Batterie (B) beim Empfang des Inaktivierungssignals begrenzt.

14. Flüssigkeitsspender nach Anspruch 12 oder 13, wobei die Steuerung (C) die Batterie (B) beim Empfang des Aktivierungssignals um einen ersten Betrag entlädt und wobei die Steuerung (C) die Batterie (B) beim Empfang des Bereitschaftssignals um einen zweiten Betrag entlädt, der geringer ist als der erste Betrag.

15. Flüssigkeitsspender nach einem der Ansprüche 2 bis 14, insofern von Anspruch 2 abhängig,
wobei die Steuerung (C) eine Laderate der Batterie (B) misst und in einen Stromsparmodus eintritt, wenn die Laderate geringer als eine vorbestimmte Referenzladerate ist, und die von der Batterie (B) an mindestens eine der ersten oder zweiten elektronischen Vorrichtungen (81, 82, 87, 90) gelieferten Strom im Stromsparmodus begrenzt,
wobei im Stromsparmodus die Steuerung (C) jede der elektronischen Vorrichtungen (81, 82, 87, 90) in den mehreren elektronischen Vorrichtungen als eine erste Vorrichtung oder eine zweite Vorrichtung klassifiziert und jede elektronische Vorrichtung, die als erste Vorrichtung klassifiziert ist, weiter mit Strom versorgt, aber den jeder elektronischen Vorrichtung, die als zweite Vorrichtung klassifiziert ist, zugeführten Strom begrenzt.

## Revendications

1. Distributeur de liquide pour animaux, comprenant :
un réservoir (10) présentant un fond et une paroi s'étendant vers le haut depuis le fond ;
une base (18) située sous le fond du réservoir (10) ;
au moins un premier dispositif électronique (81, 82, 87, 90) prévu dans la base (18) et
fonctionnant à l'électricité ;
un ensemble intérieur (100) amovible du réservoir (10), ledit ensemble intérieur (100) ayant une sortie pour distribuer le liquide du réservoir (10) ; et
un ensemble d'alimentation électrique prévu pour transmettre et recevoir bi-directionnellement de l'énergie sans fil entre la base (18) et l'ensemble intérieur (100),
ledit ensemble d'alimentation électrique comprenant :
une station d'accueil (71) prévue pour recevoir une alimentation externe, ladite station d'accueil (71) étant située sous la base (18),
une batterie (B) disposée dans l'ensemble intérieur (100),
un premier dispositif de transfert d'énergie sans fil (72) connecté électriquement à la batterie (B) et à au moins un premier appareil électronique, et
un contrôleur (C) prévu pour commander la batterie (B) afin d'alimenter le premier dispositif électronique (81, 82, 87, 90) via le premier dispositif de transfert d'énergie sans fil (72) lorsque la station d'accueil (71) n'est pas connectée à la base (18) ou ne reçoit pas d'alimentation externe.

2. Distributeur de liquide selon la revendication 1, comprenant en outre :
au moins un deuxième dispositif électronique (81, 82, 87, 90) prévu dans l'ensemble intérieur (100) et fonctionnant à l'électricité, l'ensemble intérieur (100) étant situé au-dessus de la base (18) lorsque l'ensemble intérieur (100) est accouplé au réservoir (10) ; et
un deuxième dispositif de transfert d'énergie sans fil (73) compris dans l'ensemble d'alimentation électrique pour alimenter ledit au moins un deuxième dispositif électronique (81, 82, 87, 90) en énergie de la station d'accueil (71).

3. Distributeur de liquide selon la revendication 1 ou la revendication 2, où le premier dispositif de transfert d'énergie sans fil (72) comprend un premier émetteur d'énergie sans fil prévu dans l'ensemble intérieur (100) et un premier récepteur d'énergie sans fil prévu dans la base (18) du réservoir (10) à un emplacement en alignement avec l'emplacement du premier émetteur d'énergie sans fil.

4. Distributeur de liquide selon l'une des revendications 1 à 3, où le deuxième dispositif de transfert de puissance sans fil (73) comprend un deuxième émetteur de puissance sans fil prévu entre le fond intérieur et le fond extérieur du réservoir (10) et un deuxième récepteur de puissance sans fil prévu dans l'ensemble intérieur (100) à un emplacement en alignement avec l'emplacement du deuxième émetteur de puissance sans fil.

5. Distributeur de liquide selon la revendication 3 ou la revendication 4, où le premier émetteur d'alimentation sans fil est connecté à la station d'accueil (71), et où le contrôleur (C) mesure un courant de détection transmis du premier émetteur d'alimentation sans fil au premier récepteur d'alimentation sans fil pour détecter si la station d'accueil (71) est connectée à la base (18) et reçoit une alimentation externe.

6. Distributeur de liquide selon la revendication 5, où le contrôleur (C) détermine que la station d'accueil (71) n'est pas connectée à la base (18) ou ne reçoit pas d'alimentation externe si le courant de détection est inférieur à un courant de référence prédéterminé, et où le contrôleur (C) détermine que la station d'accueil (71) est connectée à la base (18) et reçoit une alimentation externe si le courant de détection est égal ou supérieur au courant de référence prédéterminé.

7. Distributeur de liquide selon l'une des revendications 1 à 6, où le contrôleur (C) est prévu pour déterminer si le réservoir (10) et l'ensemble intérieur (100) sont accouplés, et où, si le contrôleur (C) détermine que l'ensemble intérieur (100) et le réservoir (10) ne sont pas accouplés, le contrôleur (C) limite une décharge de la batterie (B).

8. Distributeur de liquide selon l'une des revendications 4 à 7, si dépendante de la revendication 4, où le deuxième émetteur d'énergie sans fil et le premier récepteur d'énergie sans fil sont connectés électriquement à la batterie (B), et où le deuxième récepteur d'énergie sans fil est connecté électriquement au premier émetteur d'énergie sans fil.

9. Distributeur de liquide selon l'une des revendications 4 à 8, si dépendante de la revendication 4, où le contrôleur (C) mesure un courant de détection transmis par le deuxième émetteur de puissance sans fil et le premier émetteur de puissance sans fil pour déterminer si le réservoir (10) et l'ensemble intérieur (10) sont accouplés.

10. Distributeur de liquide de la revendications 9, où le contrôleur (C) détermine que l'ensemble intérieur (100) et le réservoir (10) ne sont pas accouplés si le courant de détection est inférieur à un courant de référence prédéterminé, et détermine que l'ensemble intérieur (100) et le réservoir (10) sont accouplés si le courant de détection est égal ou supérieur au courant de référence prédéterminé.

11. Distributeur de liquide selon l'une des revendications 1 à 10, où, si le contrôleur (C) détermine que l'ensemble interne (100) et le réservoir (10) sont accouplés, et détermine également que la station d'accueil (71) ne reçoit pas d'alimentation externe, le contrôleur (C) décharge la batterie (B) pour fournir de l'énergie à au moins un dispositif électronique (81, 82, 87, 90).

12. Distributeur de liquide selon l'une des revendications 1 à 11, où le contrôleur (C) détecte en outre des informations de fonctionnement sur la base d'un signal d'activation, d'un signal de veille ou d'un signal d'inactivation reçu, le contrôleur (C) déchargeant la batterie (B) à la réception du signal d'activation ou du signal de veille, et limitant une décharge de la batterie (B) à la réception du signal d'inactivation.

13. Distributeur de liquide selon la revendication 12, où le contrôleur (C) décharge la batterie (B) à la réception du signal d'activation pour alimenter au moins un dispositif électronique (81, 82, 87, 90) prévu dans l'ensemble intérieur (100) et/ou sous le fond (18) du réservoir (10), où le contrôleur (C) décharge la batterie (B) à la réception du signal de veille pour se préparer à alimenter ledit au moins un dispositif électronique (81, 82, 87, 90) si une autre condition est satisfaite, et limite la décharge de la batterie (B) à la réception du signal d'inactivation.

14. Distributeur de liquide selon la revendication 12 ou la revendication 13, où le contrôleur (C) décharge d'une première quantité la batterie (B) à la réception du signal d'activation, et où le contrôleur (C) décharge la batterie (B) d'une deuxième quantité inférieure à la première quantité à la réception du signal de veille.

15. Distributeur de liquide selon l'une des revendications 2 à 14, si dépendante de la revendication 2,
où le contrôleur (C) mesure un taux de charge de la batterie (B) et entre dans un mode d'économie d'énergie si le taux de charge est inférieur à un taux de charge de référence prédéterminé, et limite l'énergie fournie par la batterie (B) au premier et/ou au deuxième dispositif électronique (81, 82, 87, 90) en mode d'économie d'énergie,
où, en mode économie d'énergie, le contrôleur (C) classe chacun des dispositifs électroniques (81, 82, 87, 90) de la pluralité de dispositifs électroniques en tant que premier ou deuxième dispositif, et continue à alimenter chaque dispositif électronique classé en tant que premier dispositif, mais limite l'alimentation de chaque dispositif électronique classé en tant que deuxième dispositif.
